# EUROPEAN PATENT SPECIFICATION

(11) **EP 2 982 044 B1**
(45) Date of publication and mention of the grant of the patent: **18.12.2019**
(21) Application number: 14719379.1
(22) Date of filing: 02.04.2014
(51) Int. Cl.: H04B 1/715, H04W 28/02, H04W 72/08, H04B 1/10, H04W 72/04

(54) **METHOD AND APPARATUS FOR INTERFERENCE MITIGATION CONFIGURATION IN A WIRELESS COMMUNICATION NETWORK**
VERFAHREN UND VORRICHTUNG ZUR KONFIGURATION DER INTERFERENZMINDERUNG IN EINEM DRAHTLOSEN KOMMUNIKATIONSNETZWERK
PROCÉDÉ ET APPAREIL POUR LA CONFIGURATION DE L'ATTÉNUATION DES INTERFÉRENCES DANS UN RÉSEAU DE COMMUNICATION SANS FIL

(30) Priority: 04.04.2013 US 201361808276 P
(43) Date of publication of application: 10.02.2016
(73) Proprietor: Telefonaktiebolaget LM Ericsson (publ), 164 83 Stockholm (SE)
(72) Inventor: NAMMI, Sairamesh, S-164 48 Kista (SE); LIDIAN, Namir, S-171 49 Solna (SE); KAZMI, Muhammad, S-167 39 Bromma (SE)
(74) Representative: Zacco Sweden AB
(86) International application number: PCT/SE2014/050391
(87) International publication number: WO 2014/163565

(56) References cited:
- WO-A1-2012/162788
- WO-A1-2013/176589
- US-A1- 2002 154 713
- US-A1- 2010 099 450
- KLAUS I PEDERSEN ET AL: "eICIC Functionality and Performance for LTE HetNet Co-Channel Deployments", VEHICULAR TECHNOLOGY CONFERENCE (VTC FALL), 2012 IEEE, IEEE, 3 September 2012 (2012-09-03), pages 1-5, XP032294681, DOI: 10.1109/VTCFALL.2012.6399106 ISBN: 978-1-4673-1880-8

## Description

### TECHNICAL FIELD

The present invention generally relates to wireless communications and particularly relates to interference mitigation configurations in wireless communication networks.

### BACKGROUND

The terms interference mitigation receiver, interference cancellation receiver, interference suppression receiver, interference rejection receiver, interference aware receiver, interference avoidance receiver, etc., are interchangeably used herein. All of these terms refer to a category of advanced or enhanced communication receivers. Interference cancellation or suppression by such advanced receivers can lead to the complete elimination of interference with respect to desired signal components. In other cases, interference with respect to the desired or useful signal is reduced but not necessarily eliminated. Broadly, then, the term "interference mitigation" refers to the ability of a communication receiver to mitigate the interference caused by at least certain signals received at the receiver from at least one interfering cell in a wireless communication network comprising multiple cells and in which receivers are served by a particular cell or cells in the network, depending upon their location with respect to the various cell coverage areas.

Interfering cells are also referred to as "aggressor" cells. Here, a given interfering cell is a neighbor of the serving cell for the user equipment, UE, or other receiver at issue, or is a neighbor of any cell measured by the receiver. In general, the receiver receives one or more types of interfering signals from an aggressor cell. Thus, the term "interfering cell" is interchangeable with the terms "aggressor cell" or "dominant neighboring cell." The receiver may be required to mitigate interference from more than one interfering cell.

Various approaches to interference mitigation, IM, are known, with the various modes differing in terms of their relative IM performance under various operating conditions, their relative complexity, and, importantly, in terms of the amount of network assistance needed by them. That is, different IM modes require differing degrees of network assistance information regarding interfering cells or signals. Some IM modes require no assistance at all.

For purposes of this discussion, IM modes may be classified into the following three main categories: (1) a Dynamically network-Assisted Interference Mitigation or DAIM mode, (2) a Semi-statically network-Assisted Interference Mitigation or SAIM mode, and (3) a Non-Network-Assisted Interference Mitigation or NNAIM mode. This latter mode may be further distinguished as being performed in some cases with scheduling restrictions based on pre-defined resource sets, and as being performed in other cases without such scheduling restrictions.

In the case of a DAIM receiver that is operating as a "victim" receiver with respect to one or more interfering cells in a wireless communication network, a supporting node in the network must provide the DAIM receiver with at least some minimum information related to the physical resources used for downlink transmissions in each interfering cell. Here, a "DAIM receiver" is any given IM receiver operating in the DAIM mode.

The assistance information depends upon the type of physical channel or physical signal that is interfering with the DAIM receiver. The information can be provided for one or plurality of interfering cells. In the Long Term Evolution or LTE context, example interfering signals or channels include HS-SCCH, HS-DSCH, A-GCH, E-ROCH, BCH, PDSCH, and PDCCH. Typically the assistance information includes cell IDs for the interfering cells, a receiver ID, e.g. a UE ID such as an HS-DSCH Radio Network Temporary Identifier or H-RNTI, antenna configuration or antenna transmission mode used by the receiver, physical channel resources used by other receivers in the network whose downlink transmissions in the interfering cell(s) cause interference to the victim receiver. The physical resources may comprise one or more of the transport format information, Modulation and Coding Scheme, MCS, information, CDMA channelization code(s), a number of channelization codes, resource blocks or RBs in the case of LTE, etc.

For a SAIM UE or other such IM receiver operating in the network, the supporting network node configures the receiver with a potential set of physical channel resources, e.g. a set of transport format/MCS, channelization codes, resource blocks, etc., that can be used for downlink transmissions in the interfering cell(s). As such, this type of assistance information is referred to as "semi-static" information. The SAIM receiver therefore must blindly decode the actual physical channel used in the interfering cells, although the assistance information received at the SAIM receiver facilitates the decoding. This approach requires that the resource assignment(s) in the interfering cell(s) are confined to the set of physical resources configured at the victim receiver, via the static assistance information. Consequently, the use of SAIM receivers constrains the network in terms of scheduling and resource assignments in the interfering cells.

For a NNAIM UE or other such IM receiver operating in the network, the supporting network node does not need to provide any information related to the physical resources used for downlink transmissions in the interfering cell(s). However, the network node may still have to send at least the cell ID(s) of the interfering cell(s). Alternatively, the network node may at least send an indication on the number of interferers, e.g., the strongest neighbor cells, whose interference is to be mitigated by the NNAIM receiver.

In turn, the NNAIM receiver blindly decodes downlink transmissions from the interfering cells and cancels the interference. However, operation in the NNAIM mode requires the receiver to perform additional processing to correctly decode the transmissions from interfering cells. In one variant of this type of processing, the NNAIM receiver is able to mitigate the interference caused by interfering cells regardless of the physical resources used in that cell. In other words, this type of NNAIM receiver is capable of blindly decoding and mitigating any type of transmission-at least any type of transmission used within the network. However, in the interest of limiting complexity, some types of NNAIM receivers are capable of mitigating interference only if the physical resources used for downlink transmissions in the interfering cells are limited to a certain pre-defined set or sets. These pre-defined resource sets may be specified in the controlling standards documents applicable to the network. Thus, this second variant of the NNAIM receiver puts even more constraints on the network, in terms of scheduling and resource assignment freedom in the interfering cells.

US2010/099450 discloses an inter-cell interference mitigation method wherein a system configuration procedure is performed to select one or more of the mitigation methods for using during communication.

### SUMMARY

The invention is defined by the appended claims.

According to one aspect of the teachings herein, a wireless communication network sends Interference Mitigation, IM, configuration information to a User Equipment, UE, or other wireless device operating in the network. The IM configuration information indicates a selected IM mode or mode. The IM modes differ with respect to the amount of network assistance required. Advantageously, IM mode selection by the network is based on obtaining capability information for the wireless device, indicating which IM modes are supported by the wireless device, and is further based on evaluating one or more operating parameters, such as network loading or resource availability and reception conditions, such as signal quality, at the wireless device. From among the IM modes supported by the wireless device, the network selects the mode(s) that best complement current operating conditions, and the wireless device in turn restricts its operation to the selected IM modes.

In one example, a method is implemented at a network node in a wireless communication network, for selecting an IM mode to be used by a wireless device operating in the network. The example method includes obtaining capability information for a wireless device. The capability information indicates which particular IM modes the wireless device supports from among a plurality of defined IM modes that differ with respect to an amount of network assistance required, and the method further includes selecting one or more of the supported IM modes, as indicated by the capability information. The selection is based on evaluating selection information bearing on the selection of IM modes for the wireless device, and the selection information comprises one or more operating parameters associated with current operation of the wireless communication network and/or the wireless device. The method further includes sending IM configuration information for the wireless device, indicating the selected one or more IM modes.

In a corresponding network-side example, a network node comprises a communication interface and an associated processing circuit. The processing circuit is configured to obtain capability information for a wireless device. As before, the capability information indicates which particular IM modes the wireless device supports from among a plurality of defined IM modes that differ at least with respect to an amount of network assistance required. The processing circuit is further configured to obtain selection information bearing on the selection of IM mode for the wireless device. The selection information comprises one or more operating parameters associated with current operation of the wireless communication network and/or the wireless device, and the processing circuit is further configured to send IM configuration information for the wireless device via the communication interface, indicating the selected one or more IM modes. The processing circuit is further configured to select one or more of the supported IM modes, as indicated by the capability information, based on evaluating the selection information.

As a complementary device-side example, a method at a wireless device selects an IM mode to be used by the wireless device for operation in the network. The method includes sending IM capability information to the wireless communication network, indicating which particular IM modes the wireless device supports from a plurality of defined IM modes that differ with respect to an amount of network assistance required. The method additionally includes receiving IM configuration information from the wireless communication network. The received IM configuration information indicates a selected one or more of IM modes, as selected by the wireless communication network for use by the wireless device and, correspondingly, the method includes operating a receiver circuit in the wireless device according to the one or more selected IM modes.

In another example, a wireless device is configured for operation in a wireless communication network and includes a communication interface and an associated processing circuit. The processing circuit is configured to select an IM mode to be used by the wireless device for operation in the network. In particular, the processing circuit is configured to send IM capability information to the wireless communication network, indicating which particular IM modes the wireless device supports from a plurality of defined IM modes that differ with respect to an amount of network assistance required, and to receive IM configuration information from the wireless communication network that indicates a selected one or more of IM modes, as selected by the wireless communication network for use by the wireless device. Correspondingly, the processing circuit is configured to operate a receiver circuit in the wireless device according to the one or more selected IM modes.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Fig. 1 is a block diagram of one embodiment of a network node and one embodiment of a wireless device.
Fig. 2 is a block diagram of example details for the network node and wireless device of Fig. 1.
Fig. 3 is a logic flow diagram of one embodiment of a method of processing in a network node.
Fig. 4 is a logic flow diagram of one embodiment of a method of processing in a wireless device.
Figs. 5 and 6 are block diagrams of different embodiments of a wireless communication network, including examples of one or more network nodes and one or more wireless devices according to the teachings herein.

### DETAILED DESCRIPTION

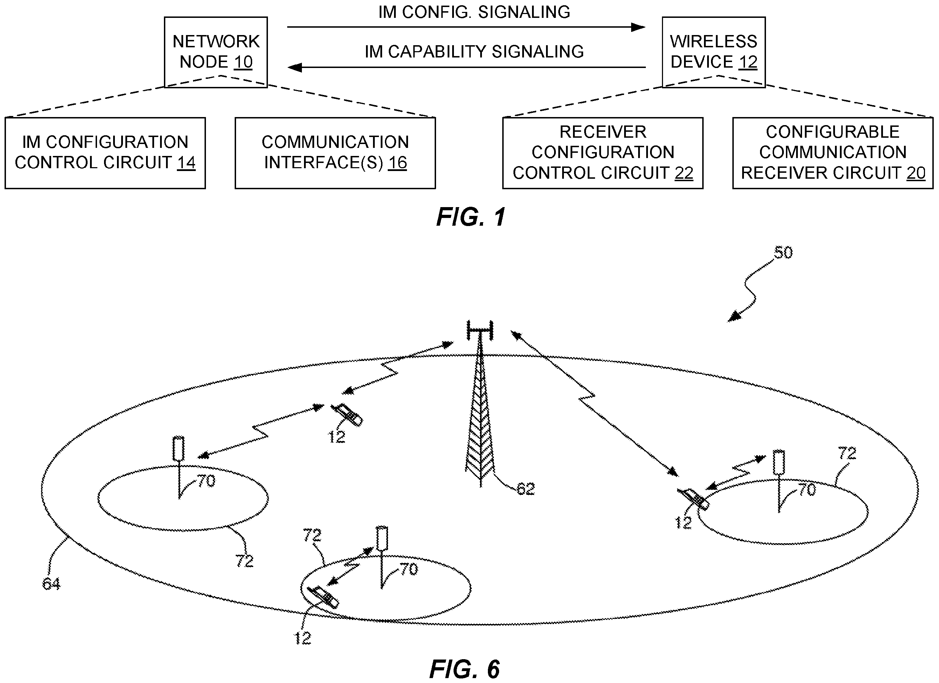

Fig. 1 an example network node 10 and an associated wireless device 12, which may be a 3GPP UE but is not limited to such examples. Correspondingly, the network node 10 may comprise a type of base station, a base station controller, or another radio node within the Radio Access Network, RAN, portion of a wireless communication network-not shown. In one or more alternative embodiments, the network node 10 comprises a node within a Core Network, CN, portion of the wireless communication network. Thus, it will be appreciated that Interference Mitigation, IM, configuration signaling going from the network node 10 to the wireless device 12 may be sent directly between the network node 10 and the wireless device 12, or it may be carried transparently through one or more nodes, although the respective protocol endpoints for such signaling still may reside in the network node 10 and the wireless device 12. The same flexibility applies with respect to IM capability information going from the wireless device 12 to the network node 10.

Further, those of ordinary skill in the art will appreciate that Fig. 1 illustrates functional and/or physical circuit arrangements and that the network node 10 and the wireless device 12 generally will include digital processing circuits and associated memory or other computer-readable medium for storing configuration data, operational or working data, and for storing computer program instructions. In at least some of the embodiments contemplated herein, the network-side and device-side functionality is realized at least in part based on the programmatic configuration of digital processing circuitry, based on the execution by that circuitry of stored computer program instructions.

One sees from the example that the network node 10 includes an IM configuration control circuit 14 and one or more communication interfaces 16. The communication interface(s) 16 depend on the nature of the network node 10. In a base station or other radio node example, the communication interface(s) 16 include a radio transceiver, e.g., pools of radio transmission, reception, and processing circuitry, for communicating with any number of wireless devices in any one or more cells of a wireless communication network. Such circuitry includes one or more transmitters and receivers, e.g., cellular radio circuits, along with power control and associated signal processing. Further communication interfaces in this scenario include, e.g., inter-base-station interfaces and/or backhaul or other CN communication interfaces.

For cases where the network node 10 is a CN node, the communication interface(s) 16 include physical and logical interface circuits for communicating with RAN nodes and for sending signaling at defined network layers-protocol levels-to wireless devices 12, e.g., for transport transparently through one or more radio nodes. Example CN nodes include a positioning node, an Operations & Maintenance node, and an Operations Support Systems, OSS, node. Example RAN nodes include base stations, etc. Similarly, signaling from wireless devices 12 regarding their IM capabilities may be received directly via wireless transmission from such devices over the air interface, or may be received indirectly via backhaul or other signaling.

The wireless device 12 may be a cellular radiotelephone-such as a smartphone, feature phone, etc.-or may be a network adaptor, card, modem or other such interface device. Further examples include a laptop computer or other such device with wireless communication capabilities. Of course, these examples are non-limiting and the wireless device 12 should be broadly understood as a communications transceiver-although the transmitter is not shown explicitly in Fig. 1-that includes a "configurable" communication receiver circuit 20 and a corresponding receiver configuration control circuit 22.

Those of ordinary skill in the art will appreciate that the configurable communication receiver circuit 20 may include a mix of analog and digital "front-end" circuits, which operate on antenna-received signals to produce one or more corresponding streams of digital signal samples. DSPs and/or other baseband processing circuits included in or associated with the receiver circuit 20 process the digital signal samples, e.g., by applying linearization and symbol detection/decoding, for recovering the transmitted information. In the context of this discussion, one item of particular interest is the configurability of the receiver circuit 20 with respect to its IM operation. In particular, the receiver circuit 20 is configurable to operate as a number of different receiver types, e.g., any two or more of a DAIM-type receiver, a SAIM-type receiver, and/or a NNAIM-type receiver. Put another way, the receiver circuit 20 can operate in any one among a plurality of defined IM modes, which modes differ at least with respect to the amount of network assistance required.

The receiver configuration control circuit 22, which may be a functional circuit realized within a larger set of digital processing circuitry within the wireless device 12, is operationally associated with the receiver circuit 20. The configuration control circuit 22 is configured to select or otherwise control which receiver type is employed by the receiver circuit 20-i.e., the configuration control circuit 22 controls which IM mode(s) are used by the receiver circuit 20. For example, the control circuit 22 responds to configuration control signaling received from the network by controlling the receiver circuit 20 to adopt whichever "receiver type" is signaled by the network. Here, "receiver type" means IM mode, e.g., a first mode in which the receiver circuit 20 operates as a DAIM receiver, a second mode in which the receiver circuit 20 operates as a SAIM receiver, and a third mode in which the receiver circuit 20 operates as a NNAIM receiver.

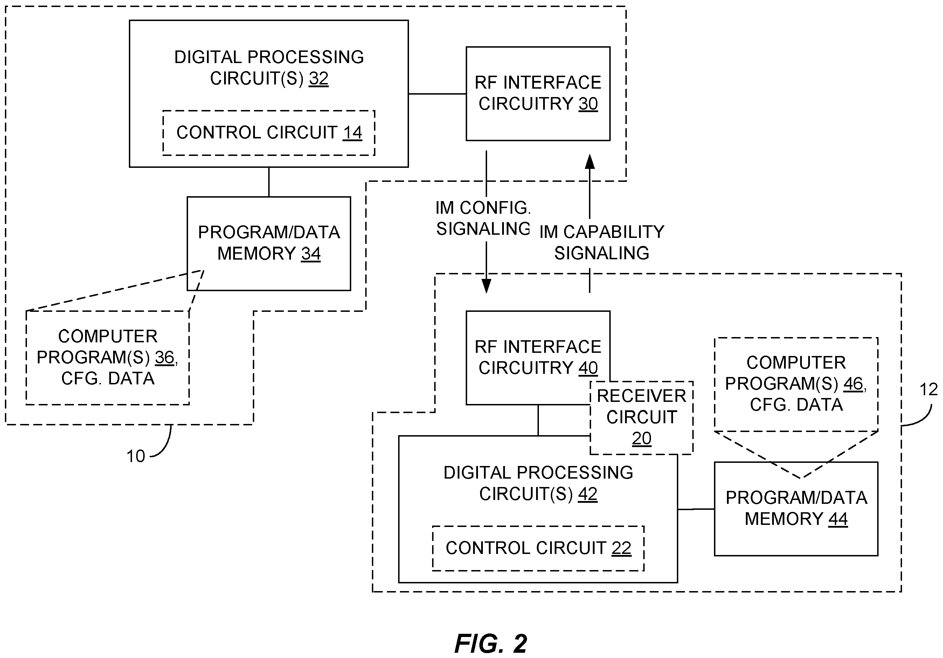

Fig. 2 provides further example details for the network node 10 and the wireless device 12 in one embodiment. The network node 10 comprises RF interface circuitry 30, one or more digital processing circuits 32, which implement the aforementioned control circuit 14, along with program/data memory 34 storing configuration data and/or a computer program 36. The digital processing circuit(s) 32 are also referred to herein as a "processing circuit 32."

The wireless device 12 includes RF interface circuitry 40, which includes the aforementioned receiver circuit 20, along with one or more digital processing circuits 42, which implement the aforementioned control circuit 22. The example wireless device 12 further includes program/data memory 44 that is associated with the digital processing circuit(s) 42 and stores configuration data and/or a computer program 46. The digital processing circuit(s) 42 are also referred to herein as a "processing circuit 42."

The network node 10 comprises, for example, a NodeB, eNodeB, or other type of base station. It will be appreciated that the RF interface circuitry 30 shown for the network node 10 in Fig. 2 comprises at least a part of the communication interface(s) 16 introduced in Fig. 1. In one example, this circuitry comprises a cellular radio interface for communicating with pluralities of wireless devices 12 over a defined air interface according to defined communication protocols-e.g., as defined for WCDMA operation, LTE operation, etc. Further, it will be appreciated that the digital processing circuits 32 may comprise any one or more computer-based circuits that control at least communication-related processing. For example, such circuitry controls transmit and receive operations through the RF interface circuitry 30. The circuit(s) 32 may further include a number of other functional circuits not shown, such as user-scheduling circuits to control uplink and/or downlink transmissions among a plurality of wireless devices 12 being supported by the network node 10, and may further include one or more conditions-determination circuits, such as for determining one or more operating parameters bearing on IM mode selection as taught herein. For example, the circuit(s) 32 are configured to determine network loading, e.g., for one or more served cells and/or one or more neighboring cells.

Thus, an example network node according to some embodiments includes a communication interface 16, such as the RF circuitry 30 of Fig. 1, and further includes an associated processing circuit 32. The processing circuit 32 is configured to obtain capability information for a wireless device 12, wherein the capability information indicates which particular IM modes the wireless device 12 supports from among a plurality of defined IM modes that differ at least with respect to an amount of network assistance required.

In at least one embodiment, the wireless device 12 indicates its IM capability using a "category" indication. For example, in the Third Generation Partnership Project, 3GPP, context where multiple "UE categories" are defined to denote different device capabilities or combinations of capabilities, one or more UE categories are defined or modified to indicate IM mode capability. In other embodiments, the wireless device 12 expressly indicates its IM capability information via one or more capability messages transmitted by it. The IM capability information at least indicates the different IM modes supported by the wireless device 12.

However the IM capability information is obtained for the wireless device 12, the processing circuit 32 is configured to select one or more of the supported IM modes, as indicated by the IM capability information. This selection is based on evaluating selection information bearing on the selection of IM mode for the wireless device 12, where the selection information comprises one or more operating parameters associated with current operation of the wireless communication network and/or the wireless device.

Example operating parameters include at least one of: network loading with respect to at least a serving cell of the wireless device 12; a distribution of wireless devices 12 at least in the serving cell of the wireless device 12; signal quality at the wireless device 12; user traffic characteristics at least in the serving cell of the wireless device; Quality-of-Service, QoS, requirements; and a battery state at the wireless device 12-e.g., remaining battery life. In the same or other embodiments, the operating parameters considered by the network node 10 in deciding which IM mode(s) the wireless device 12 should use or should be limited to using include any one or more of network loading, e.g., in a serving cell and/or in one or more interfering cells of the network, resource availability in the serving and/or interfering cells, the types of communication/data services that are active in the serving and/or interfering cells, the distribution of other wireless devices 12 in the serving and/or interfering cells, and, as noted, signal quality at the wireless device 12 with respect to its serving cell.

The processing circuit 32 is further configured to send IM configuration information for the wireless device 12 via the communication interface 16, indicating the selected one or more IM modes. This transmission thereby identifies to the wireless device 12 the IM mode or modes that it should use, or more generally, the IM mode or modes to which it should restrict the operation of its receiver circuit 20. The network node 10 sends the IM configuration information directly, e.g., via an over the air transmission, or the IM configuration information may be transported transparently through one or more intervening nodes, e.g., where the network node 10 and the wireless device 12 are protocol endpoints. The IM configuration information also may be sent from the network node 10 to another node, which then sends it along towards the wireless device 12. Thus, the network node 10 may be a RAN node or a CN node, and the processing circuit 32 in either case is configured in some embodiments to generate the IM configuration information for the wireless device 12 as IM assistance data, generated in dependence upon the selected one or more IM modes.

In one or more such embodiments, the processing circuit 32 is configured to generate the IM assistance data, which is based at least in part on acquiring information related to downlink transmissions in one or more cells that are interfering cells with respect to the wireless device 12. Such information includes at least one of: transport format information, physical channel resource information, resource block information as used for the downlink transmissions in the one or more interfering cells, and device identifiers for one or more other wireless devices 12 operating in the one or more interfering cells.

Further, in some embodiments, the processing circuit 32 is configured to generate IM configuration information for one or more network nodes that are associated with one or more cells in the wireless communication network that are interfering cells with respect to the wireless device 12 in question-e.g., the processing circuit 32 generates IM configuration information for one or more base stations controlling the interfering cells. The IM configuration information generated for the one or more network nodes comprises, in an example embodiment, network node configuration information indicating physical resource selections or identifying physical resource restrictions to be observed in the interfering cells for at least some types of downlink transmissions. In a particular embodiment, the processing circuit 32 generates the IM configuration information for one or more network nodes associated with one or more of the cells that are interfering cells with respect to the wireless device 12 in question, so that the IM configuration information indicates at least one of a reduced set of physical resources and user scheduling restrictions, to be used in one or more of the interfering cells, at least for certain downlink transmissions. Correspondingly, in such embodiments, the IM configuration sent to the wireless device 12 may indicate the reduced or restricted physical resource selections to be used in one or more cells that are interfering cells with respect to the wireless device 12. Giving this information to the wireless device 12 allows the wireless device 12 to configure IM operations at the wireless device 12.

Thus, in one or more embodiments, the network node 10 is an apparatus configured for operation in a wireless communication network and comprises a first module for obtaining capability information for a wireless device 12, wherein the capability information indicates which particular IM modes the wireless device 12 supports from among a plurality of defined IM modes that differ with respect to an amount of network assistance required. The network node 10 further includes a second module for obtaining selection information bearing on the selection of IM modes for the wireless device 12. The selection information comprises one or more operating parameters associated with current operation of the network and/or the wireless device 12, and the network node 10 includes a third module for selecting one or more of the supported IM modes, as indicated by the capability information, based on evaluating the selection information; and a fourth module for sending the IM configuration information for the wireless device 12, indicating the selected one or more IM modes.

Similarly, in one or more embodiments, the wireless device 12 is an apparatus that is configured for operation in a wireless communication network, and is adapted to select an IM mode to be used by the wireless device 12 for operation in the network. The wireless device 12 comprises a first module for sending IM capability information to the network, indicating which particular IM modes the wireless device 12 supports from a plurality of defined IM modes that differ with respect to an amount of network assistance required. The wireless device 12 further includes a second module for receiving IM configuration information from the network that indicates a selected one or more of the defined IM modes, as selected by the network for use by the wireless device 12, and a third module for operating the receiver circuit 20 in the wireless device 12 according to one of the one or more selected IM modes.

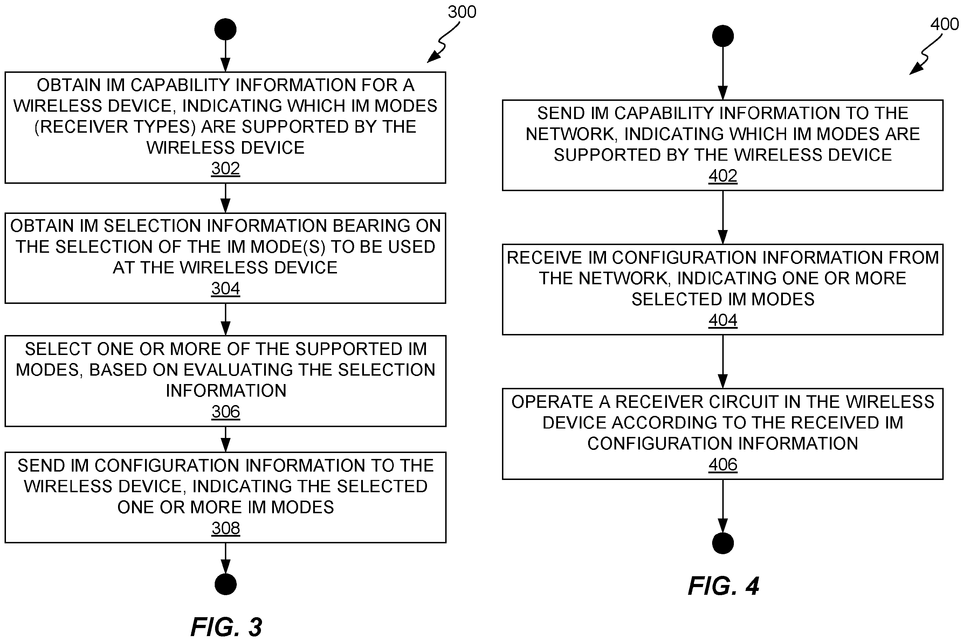

Of course, while Figs. 1 and 2 provide example implementation details for the contemplated network node 10, it will be appreciated that the teachings herein are not limited to these particular structural or architectural details and that the contemplated functionality can be realized with other circuit arrangements. Broadly, it is contemplated herein that a network node 10 is configured to implement a method of selecting an IM mode to be used by a wireless device 12 operating in a wireless communication network. Fig. 3 illustrates an example of this method, denoted as method 300.

The processing of method 300 may be performed for any number of wireless devices 12, and may be done jointly for more than one such device, or in parallel or in series for multiple devices. Further, it will be appreciated that the processing indicated in Fig. 3 may be implemented at least in part via programmatic configuration, based on the execution of stored computer program instructions, e.g., by the execution of the stored computer program 36 by the digital processing circuits 32, as shown in Fig. 2 for the network node 10. It also shall be appreciated that the processing of method 300 may be done in a different order than depicted, e.g., some steps may be done in an order different than that suggested by the diagram. Further, one or more of the processing steps may be done as part of other processing ongoing at the network node 10, e.g., as background processes, as on-demand, triggered, or timed processes, etc.

With these points in mind, the method 300 as illustrated includes obtaining (Block 302) capability information for a wireless device 12. The capability information indicates which particular IM modes the wireless device 12 supports from among a plurality of defined IM modes that differ with respect to an amount of network assistance required. The method 300 further includes obtaining (Block 304) selection information bearing on the selection of IM modes for the wireless device 12. In particular, the selection information comprises one or more operating parameters associated with current operation of the wireless communication network and/or the wireless device 12.

The method 300 continues with selecting (Block 306) one or more of the supported IM modes, as indicated by the capability information. The selection is based on evaluating the selection information and the method 300 correspondingly includes sending (Block 308) IM configuration information for the wireless device 12, indicating the selected one or more IM modes. Sending the IM configuration information for the wireless device 12 can be understood as the network node 10 controlling IM modes at the wireless device 12, or at least restricting the IM modes used by the wireless device 12.

For example, the network node 10 selects a subset of two or more IM modes from a larger plurality of defined IM modes supported by the wireless device 12, and indicates the selected subset in the IM configuration information sent for the wireless device 12, to thereby indicate to the wireless device 12 that it may select any IM mode in the selected subset, or even switch between them, but should not use any IM mode not in the indicated subset. Further, as noted, the IM configuration information sent for the wireless device 12 may include additional information, such as an indication of the resources used for interfering transmissions in the interfering cell(s), or an indication of resource restrictions applicable to those types of transmissions.

In at least some embodiments, the network node 10 may also generate IM configuration information for one or more network nodes, e.g., configuration information for one or more radio nodes associated with cells that are interfering cells with respect to the wireless device 12, e.g., neighboring cells of the device's current serving cell(s). Also as noted, the IM configuration information for the wireless device 12 includes, for example, an indication of the IM mode(s) to use, which indication may be explicit or implicit. Further, the IM configuration signaling may include, e.g., an identification of the physical resources associated with the interferer(s) of interest, which may be one or more dominant interferences, and particularly which may be one or more neighboring cell base stations. In that case, the configuration signaling may include an indication of the radio resources associated with particular interfering channels/signals from the interfering cells, to simplify or otherwise improve interference-mitigation processing by the wireless device 12.

Turning back to Figs. 1 and 2 in the context of device-side details, an example wireless device 12 includes a communication interface-the RF receiver circuitry 40, including the communication receiver circuit 20, which supports a plurality of defined IM modes. The example wireless device 12 further includes a processing circuit 42 that is associated with the communication interface and configured to select an interference-mitigation, IM, mode, to be used by the wireless device 12 for operation in the network, based on being configured to: send IM capability information to the wireless communication network, indicating which particular IM modes the wireless device 12 supports from a plurality of defined IM modes that differ with respect to an amount of network assistance required; receive IM configuration information from the wireless communication network that indicates a selected one or more of IM modes, as selected by the wireless communication network for use by the wireless device 12; and operate the receiver circuit 20 in the wireless device 12 according to one of the one or more selected IM modes. As noted, the wireless device 12 may comprise a 3GPP user equipment, UE.

Further, in some embodiments, the IM configuration information further indicates a reduced or restricted set of physical resources that are or will be used by one or more interfering transmitters in one or more cells neighboring a serving cell of the wireless device 12. Here, the processing circuit 42 is configured to configure IM operation of the receiver circuit 20 in dependence on the reduced or restricted set of physical resources. For example, it may restrict the search space used by the receiver circuit 20 for blind detection or decoding of interfering signals, as part of its IM operations.

In some embodiments, the processing circuit 42 is configured send the IM capability information as an Information Element, IE, or other indicator that indicates which two or more IM modes the wireless device supports from among a plurality of defined IM modes. In at least one embodiment, the plurality of defined IM modes comprises a Dynamically Network Assisted Interference Mitigation, DAIM, mode, a Semi-statically Network Assisted Interference Mitigation, SAIM, mode, and a Non-Network Assisted Interference Mitigation, NNAIM, mode. Further, in some embodiments, the IM capability information indicates IM capability information for the wireless device 12, for operation in heterogeneous networks. In any case, the processing circuit 42 in one or more embodiments is configured to set the IM mode used by the receiver circuit 20 in the wireless device 12 as one of the selected one or more IM modes indicated in the IM configuration information. That is, the processing circuit 42 may set the IM mode according to a specific IM mode selection indicated by the network, or it may restrict its use of IM modes to only those modes indicated by the network in the IM configuration message.

Fig. 4 illustrates a corresponding, complementary device-side method 400 of processing in the wireless device 12. Such processing in one or more embodiments is carried out, at least in part, via the programmatic configuration of digital processing circuits, e.g., based on the execution of stored computer program instructions in a computer program 46 by the digital processing circuits 42 shown in the example of Fig. 2.

According to the example illustration, the method 400 includes sending IM mode capability information to a wireless communication network (Block 402), which may be done at call setup / initial registration, periodically or otherwise on a timed basis, or on a triggered or event-driven basis. The method 400 continues with receiving (Block 404) IM configuration information from the network, e.g., from the network node 10, and operating (Block 406) the receiver circuit 20 according to the received IM configuration information-i.e., restricting the IM mode(s) used by the receiver circuit 20 in accordance with the indication of the IM mode(s) selected by the network.

It should be understood that the network may send updated IM configuration signaling when needed, such as in response to changes in network loading or other network operating conditions in or around the cell in which the wireless device 12 is operating, and/or in response to changes in the location of the wireless device 12-e.g., its movement into a border region of higher interference, etc. Thus, the wireless device 12 is configured in one or more embodiments to update its operation of the receiver circuit 20 as needed, in response to receiving updated IM configuration information.

It should also be understood that in one or more embodiments, operating the receiver circuit 20 according to the received IM configuration information comprises, e.g., configuring the receiver circuit 20 according to the received IM configuration information, and operating the receiver circuit 20 so configured. Configuring the receiver circuit 20 comprises, for example, configuring it to operate according to the selected IM mode as indicated in the received configuration information. For a case where the IM configuration information indicates a selected two or more of the defined IM modes, the method includes, for example, choosing one of the selected two or more modes for operating the receiver circuit 20, based on selection information bearing on the selection of IM modes at the wireless device 12. The selection information comprises, for example, one or more operating parameters associated with current operation of the network and/or the wireless device 12.

In the same or another example, the IM configuration information includes information bearing on the configuration of IM operations by the receiver circuit 20. For example, the additional information indicates something about the nature of interfering transmissions in one or more neighboring cells of the device's serving cell. Such information may comprise user traffic information, resource allocation or resource restriction information as applicable to the interfering transmissions, etc. In such embodiments, the wireless device 12 is configured to use the additional information to configure one or more aspects of IM operation. For example, if the received IM configuration information indicates resource allocations or restrictions, the wireless device 12 configures its interference mitigation processing for a reduced set of physical channel resources (e.g. a set of transport format/MCS, channelization codes, resource blocks etc.) that are used or available for making downlink transmissions in at least one interfering cell.

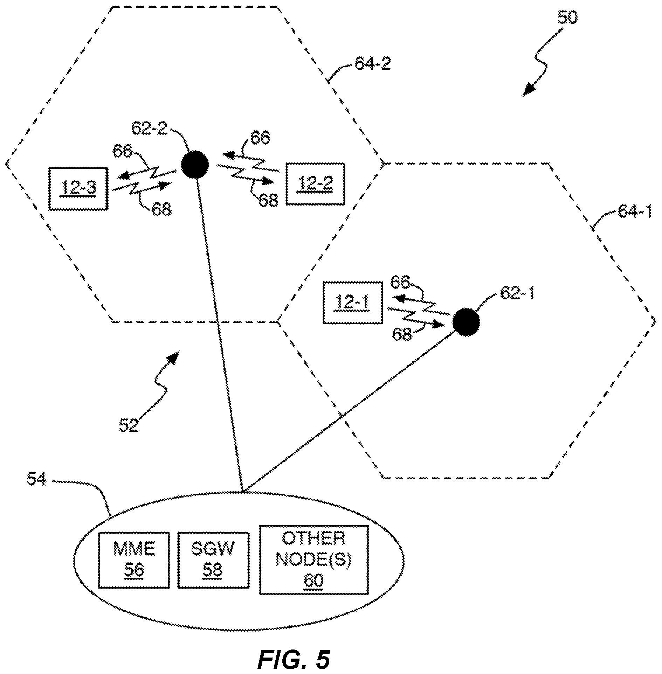

Fig. 5 illustrates a homogenous network example, wherein a wireless communication network 50 includes a RAN 52 and a CN 54. The CN 54 includes a Mobility Management Entity or MME 56, a Serving Gateway or SGW 58, and one or more other nodes 60, such as positioning nodes, O&M nodes, OSS nodes, SON nodes, etc. Any one or more of these nodes may be configured as the network node 10 described above.

Alternatively, the network node 10 is implemented in the RAN 52, e.g., as one of the base stations 62, where each base station 62 supports one or more cells 64, e.g., macro or wide-area cells, based on transmitting downlink signals 66 and receiving uplink signals 68. In the context of this disclosure, it will be appreciated that signal transmissions in one cell 64 represent a source of interference with respect to neighboring cells 62.

In another example, the wireless communication network 50 is a heterogeneous network that includes a mix of "macro" cells and "micro" cells, such as shown in Fig. 6. While the particular respective sizes of these cells are not fixed per se, macro cells are characterized by their typically large sizes as compared to micro cells (also referred to as hotspots, pico cells, femto cells, etc.). Further distinguishing macro and micro cells, macro cells typically are served by base stations that operate at high transmission powers as compared to the micro cells, which typically are served by low-power base stations, often referred to as low-power nodes or LPNs or access points, etc. The macro and micro cells may be based on the same or on different Radio Access Technologies, RATs. Regardless, the teachings herein advantageously consider the nature and/or involved radio resources of neighbor-cell and other interference sources with respect to IM configuration determination.

In any case, in Fig. 6, one sees that the wireless communication network 50 includes at least one macro base station 62 providing service in a corresponding macro cell 64. In turn, any one or more micro base stations 70 provide service in corresponding micro cells 72. In this example, the micro cells 72 overlay the macro cell 64 and thus may be regarded as hotspots which provide, e.g., enhanced data rate service and/or supplement the macro cell 64 with respect to coverage gaps within the geographic area corresponding to the macro cell 64.

The network node 10 described above may be realized in the macro base station 62 and/or in the micro base stations 70. Indeed, the IM configuration control functionality described herein for the network node 10 may be realized in each one of a plurality of base stations within a given RAN, or may be realized in any number of CN nodes supporting one or more RANs. However, in at least certain deployment scenarios or in certain types of networks, there may be advantages to pushing the IM configuration control capability down to the nodes handling physical layer signaling-e.g., such nodes generally have or can efficiently obtain the various network conditions that are considered in the IM mode selection process.

As for determining the IM configuration information, e.g., for a given wireless device 12, it will be appreciated that the given wireless device 12 may be configured in a number of ways in terms of ability to signal its IM-mode capability. In some embodiments, the wireless device 12 supports at least two of the following receiver types for mitigating interference from at least one interfering cell: DAIM, SAIM, and NNAIM, with or without scheduling restrictions. The wireless device 12 may also signal additional information as part of its capability. The additional information may comprise of any one or more of the following: whether the wireless device 12 is capable of supporting any two or more receiver types for mitigating interference on all downlink physical channels or on specific downlink physical channels, e.g., only shared channels such as HS-DSCH in HSPA and PDSCH in LTE; the type of assistance information needed for mitigating the interference using a receiver type or types that require assistance information, such as whether the wireless device 12 only needs the identities of the wireless devices 12 being served in the interfering cells, or needs information about the physical channel resources assigned to such wireless devices 12, or needs to know the set of physical channel resources that can be assigned to the wireless devices 12 in the interfering cells, or needs some combination of the foregoing assistance information.

In some embodiments, the wireless device 12 might also signal that it needs to know the mapping between the type of assistance information and the type of physical channel on which the IM is applied. For example, the wireless device 12 may need to know at least the identities of those other wireless devices 12 in the interfering cells, for performing IM only on downlink control channels, such as the HS-SCCH in HSPA and the PDCCH in LTE. The wireless device 12 also may need to know the assigned or potentially assigned physical channel resources, e.g. transport format/MCS, CDMA codes, RBs, for other wireless devices 12 operating in the interfering cells, for performing IM only on downlink shared channels, such as the HS-DSCH in HSPA and the PDSCH in LTE. In another example, the wireless device 12 indicates that it needs identifiers at least for those wireless devices 12 served in the interfering cell(s) during the same Transmission Time Interval, TTI, on downlink control and shared channels.

An example wireless device 12 in one embodiment sends its IM capability information, including any related "needs" information, using higher layer protocol signals, such as using the Radio Resource Control, RRC, protocol. In one example, the IM capability information is sent from the wireless device 12 to the network in an RRC CONNECTION SETUP COMPLETE message.

Another way to signal the interference cancellation capability to the network is for the wireless device 12 to include its IM capability information in the RRC Connection Request message transmitted on the uplink CCCH Logical channel. The RRC Connection Request is the first message transmitted by a 3GPP wireless device 12 when setting up an RRC Connection to the corresponding network. A Radio Network Controller or RNC may be configured to decide whether to enable network assistance for IM, for a given cell or cells, based on obtaining the IM capability information for one or more wireless devices 12 that are served in those cells. For example, in one embodiment, the RNC decides whether to provide network assistance based on the load or number of users in each cell or combined cell connected to the RNC. Additionally, or alternatively, the RNC decides based on the number of IM-capable wireless devices 12 associated with its cells. Still further, the RNC may make or further base its decision regarding the use of network assistance based on the frame error rate of individual wireless devices 12.

In any case, once the respective Node Bs get information from the RNC(s) as to whether or not to enable network assistance, they send the respective signals to the wireless devices 12 either through broadcast or through dedicated signaling. Once a given wireless device 12 gets an indication of network assistance, it decodes and obeys the corresponding orders from the network. If the wireless device 12 gets an indication that network assistance is not supported, it will not decode the orders from Node B and thus avoid unneeded decoding complexity.

Broadly, an example wireless device 12 sends its IM capability information to the network proactively and/or upon request. Proactive signaling may be triggered based on a condition being met, such as when signal quality is below a certain threshold or when the wireless device 12 is operating in a certain frequency band. Requests from the network for IM capability information may be sent to the wireless device 12 during initial setup or after a cell change, e.g. handover, RRC connection re-establishment, RRC connection release with redirection, a PCell or primary serving cell change in Carrier Aggregation operations, etc.

In some embodiments, the network node 10 forward IM capability information as received for a wireless device 12, to one or more to other network nodes, e.g., neighboring radio network node, O&M nodes, an OSS node, a Self-Organizing Network, SON, node, etc. The forwarding operation advantageously avoids the need for a given wireless device 12 to repeatedly report its capability to new serving radio nodes after cell changes, etc. In this way, signaling overhead is reduced and any target radio node can quickly select the appropriate IM mode(s) to be used by the incoming wireless device 12.

In an example, a wireless device 12 as configured herein sends a message carrying its IM capability information to an RNC or other network node. In a particular example, the wireless device 12 uses a new Information Element, IE, to send its IM capability information. The new IE allows the wireless device 12 to indicate to the network its capability of supporting interference cancellation in heterogeneous networks. The IE is, for example, added to the "Physical channel capability" IE, as defined in the 3GPP Technical Specification, TS, 25.331.

In response to receiving the new IE, or other message or field carrying the IM capability information contemplated herein, a network node 10 selects the receiver types-IM modes-that a given wireless device 12 should use, based on the IM capability information received for the given wireless device 12 and one or more other criteria, which criteria are referred to as operating parameters. In an example case, the IM capability information in question indicates the IM modes supported by the given wireless device 12, with each different mode being considered a different receiver "type" and where the different receiver types are distinguished in terms of the amount of network assistance required.

Non-limiting examples of the one or more operating parameters that are considered by the network node 10 in deciding which IM mode or modes are preferred for selection include these items: load in the serving cell and/or one or more neighboring/interfering cells, the distribution of wireless devices 12 in the serving cell and/or in one or more neighboring/interfering cells; signal quality at the wireless device 12, user traffic characteristic in the neighboring/interfering cells, the number of interfering cells, battery state at the wireless device 12, or any combination of these example criteria.

In one example of load consideration, the network node 10 observes the load in the serving cell. The load can be expressed as the number of users in a cell and/or the number of physical channels used in a cell, for example. Channel utilization may be expressed in terms of CDMA codes, RB usage, etc. If the cell load is high, the network node 10 in some embodiments does not configure a large number of wireless devices 12 with DAIM, because of the extensive signaling required for that type of IM. For example, the network node 10 is configured to limit DAIM to a certain, limited number of wireless devices 12 and to configure the remaining wireless devices 12 for SAIM or NNAIM operation. The limit on DAIM users may be predefined, e.g., using an integer count to express the maximum number of DAIM users permitted for a given loading condition, or the limit may be signaled to the network node 10 or dynamically determined by the network node 10. Moreover, the network node 10 may have multiple thresholds for limiting DAIM users, with the different thresholds being used for different ranges of loading.

As for using a distribution parameter as a basis for selecting the preferred IM mode or modes to be used by a given wireless device 12, the network node 10 may determine the uniformity of user-wireless device-distribution within the serving cell of the wireless device 12. For example, in one scenario, the wireless devices 12 being supported in a given serving cell of the network are distributed uniformly in the cell with certain number of users in the cell borders. If there are relatively few wireless devices 12 in the cell border regions, then the network node 10 may decide that the wireless devices 12 around the cell borders should operate with SAIM or NNAIM receiver types, rather than DAIM receiver types. The network node 10 may extend this decision to all wireless devices 12 being served in the cell. That is, for a given cell associated with a given network node 10, in some embodiments, the network node 10 is configured to select SIAM and/or NNAIM modes of operation for all wireless devices 12 that are being served in the cell and are indicated as supporting those IM modes, upon determining that that is a relatively uniform distribution of wireless devices 12 in the cell and that there are fewer than a certain number or percentage of those wireless devices 12 operating in the cell border regions.

On the other hand, if there are a large number of wireless devices 12 in the cell border regions, which devices are more affected by interference from the interfering neighbor cell(s), the network node 10 may configure all or at least most of these victim wireless devices 12 to operate with DAIM receiver types. Advantageously, the associated signaling is somewhat simplified or reduced in this scenario because the DAIM-associated signaling for the wireless devices 12 operating in the same border region involves the same interfering cells and the same assistance information. Notably, the network node 10 can determine device locations in a cell based on radio measurements performed by the wireless devices 12, the network node 10, or some other node in the network. For example, user distributions and locations in a cell are determined using a suitable existing positioning method, such as e.g. Enhanced Cell ID or E-CID, Assisted Global Navigation Satellite System or A-GNSS, etc.

In embodiments of the network node 10 that use signal quality as an operating parameter for IM mode selection, the network node is configured, for example, to select the DAIM and/or the SAIM modes responsive to determining that the signal quality at the subject wireless device 12 is below a define threshold-e.g., expressed as SNR, CQI, RSRP, RSRQ, etc. One advantage here is that poor signal conditions often arise in the presence of strong interference and the selection of an assisted IM mode, such as DAIM or SAIM enhanced receiver performance at the wireless device 12, which leads to better throughput, etc. Signal quality also may be determined or inferred from Bit Error Rate, BER, or from HARQ ACK/NACK, or other feedback from the wireless device 12. The quality may be assessed with respect to the serving cell, or with respect to one or more neighboring cells, or based on relative measurements relating the serving and neighboring cells.

Some embodiments of the network node 10 consider user traffic characteristics in one or more interfering cells when selecting the IM mode or modes to be used by a wireless device 12. For example, there may be a large number of other users using delay sensitive services like VOIP in a cell. In such cases, it is recognized herein that the DAIM mode may be advantageously used, in the sense that VOIP and certain other services do not generally involve abrupt changes in scheduling and resource assignments from one scheduling instance to another. Furthermore the same users remain active for a longer time, e.g., at least 5-10 seconds. Consequently, the signaling requirements for DAIM mode operation are reduced, as compared to user traffic scenarios that involve more frequent or abrupt changes in scheduling and resource assignments. In those scenarios, the network node 10 selects the NNAIM mode, for example.

In embodiments where the network node 10 considers network loading as an operating parameter bearing on IM mode selection for a given wireless device 12 that supports, e.g., DAIM, SAIM, and NNAIM modes, the network node 10 in one embodiment selects the SAIM mode if the load in an interfering cell is above a lower threshold but below an upper threshold. If the load is below the lower threshold, the network node 10 selects the NNAIM mode, and if the load is above the upper threshold, the network node 10 selects the DAIM or the NNAIM modes, or selects both modes.

As earlier noted, some embodiments of the network node 10 consider the number of interfering cells as an operating parameter bearing on the selection of the IM mode or modes to be used by a wireless device 12. In an example, if there are two interfering cells for which the wireless device must perform mitigation interference, the network node 10 may be configured to select DAIM and SAIM modes, or, in the interest of managing network-side and device-side complexity, the network node 10 may select only the SAIM mode. In scenarios where there is only one strong interfering cell, the network node 10 selects the DAIM mode.

Further as noted, some embodiments of the network node 10 consider battery state or life at the wireless device as an operating parameter bearing on IM mode selection.

The network may assess the current UE battery life or power consumption or amount of power required as one of the metrics to decide the type of receiver to be used for mitigating interference. For example when the UE battery life is below a threshold then the network may prefer to use DAIM receiver which will have least impact on UE battery life or lower impact on power consumption. On the other hand when the battery state-e.g., as assessed in terms of remaining charge or other metric-is above a defined threshold, the network node 10 configures the wireless device 12 to use the NNAIM mode, or at least indicates via the IM configuration information, that the NNAIM mode is available for use by the wireless device 12. While the NNAIM mode eases the overall signaling burden on the network, as it does not require assistance information from the network, the NNAIM mode generally results in a higher power consumption in the wireless device 12 as compared to assisted IM modes, because of the comparatively intensive blind detection and decoding processing that must be done in NNAIM mode with respect to the interfering cell(s).

In such embodiments, the network node 10 determines battery state at the wireless device 12 in question based on receiving explicit indications of remaining battery life and/or current power consumption. Additionally, or alternatively, in one or more embodiments the network node 10 determines the battery state based on the activity level of the wireless device 12, e.g., over some defined window of time, such as the last thirty minutes. In other words, the network node 10 infers the battery state of the wireless device 12 based on knowing the operation or activity level of the wireless device 12 in some most recent time interval. In one example, the network node 10 decides that the wireless device 12 in question has a battery life above or below a defined threshold, based on whether its activity was above or below a defined threshold.

Of course, the network node 10 in some embodiments considers a plurality of operating parameters in combination, when selecting the IM mode or modes to be used by a given wireless device 12. For example, a weighted equation may be determined using terms corresponding to the various operating parameters, or a parameterized rule set may be populated in dependence on the values of the various operating parameters and then evaluated to determine which IM mode or modes are most preferred at any given time.

In one example of evaluating a combination of operating parameters, the network node 10 in one example is configured to select the DAIM mode for a given wireless device 12 in response to detecting the following combination of operating parameters: low signal quality at the wireless device 12; the current location of the wireless device 12 is at the serving cell border and close to an interfering cell; the interfering cell has a high load; and there is only one strong interfering cell. In another example, under similar conditions but with strong interfering signals from two or more interfering cells, the network node 10 selects the SAIM mode to balance IM performance at the wireless device 12 against the IM assistance-related complexities imposed on the network. It will also be appreciated that there may be instances where the operating parameter(s) considered in the IM mode selection process performed by the network node 10 result in the network node 10 deciding that any of the IM modes supported by the wireless device 12 are suitable for use. In such instances, the IM configuration information sent for the wireless device 12 would indicate that the full set of IM modes supported by the wireless device 12 are available for use.

As for the network node 10 building or otherwise generating the assistance information provided, e.g., in the IM configuration sent for the wireless device 12 and/or sent to other network nodes, such as the base station(s) associated with the interfering cell(s) in question, the network node 10 in one or more embodiments is configured to acquire information related to downlink transmissions in one or more interfering cell. This information is typically acquired directly from the interfering cells. For example, an RNC operating as the network node 10 may acquire such information from the involved Node B or Node Bs over the Iub interface. An eNode operating as the network node 10 may acquire such information from other eNode Bs over the X2 interface. A serving Node B or other base station operating as the network node 10 may acquire resources, used for downlink transmissions in the interfering cell(s) from the involved Remote Radio Head(s), RRH(s), or any other low power node interfaced with the base station. The exact contents and type of information to be acquired depends, for example, upon the IM modes supported at the wireless device 12.

For example a serving network node operating as the network node 10 may acquire semi-static allocation of resources used in interfering cells from interfering radio nodes. The semi-static information typically comprises a set of transport format parameters and physical channel resources that are used by an interfering cell for downlink transmissions to wireless devices 12 being served in the interfering cell. In another example, such semi-static information may also be pre-defined and stored in another node or in the serving network node. The semi-static information may also be linked to specific type of physical channels, e.g., resources potentially used for only HS-DSCH or other such specific channels.

In yet another example, the serving radio network node operating as the network node 10 may also acquire information about the UE identities-e.g., the H-RNTI-of the wireless devices 12 served in the interfering cells, from the interfering cells or from another node having access to the identities, which are used for scheduling users in the interfering cells. In any case, after acquiring the relevant information, the network node generates and sends corresponding assistance data for the wireless device 12, e.g., as part of the IM configuration information sent to the wireless device 12. Thus, the wireless device 12 receives an indication of the selected IM mode or modes that are available for configuring its receiver circuit 20, and receives assistance data corresponding to the configuration or processing associated with the selected IM mode or modes.

Also as noted, the network node 10 in some embodiments generates IM configuration information for one or more other nodes in the network. For example, the network node 10 in some embodiments generates IM configuration information that includes assistance data for the network node(s) associated with the interfering cell(s), e.g., for the base station(s) controlling the interfering cell(s). In one example, if the network node 10 selects the NNAIM mode with scheduling restrictions for certain wireless device 12, then the network node 10 configures one or more interfering cells with certain potential physical resources to use for downlink transmissions in the interfering cells. This configuration forces the interfering cells to perform downlink scheduling and associated resource assignments using the resources configured by the network node 10.

In other words, in some embodiments, the network node 10 sends IM configuration information to a wireless device 12, which information identifies the IM mode(s) selected by the network node 10 as being candidates for use by the wireless device 12, from among a plurality of defined IM modes supported by the wireless device 12, and which information further identifies the configured or restricted resources that are associated with downlink transmissions in one or more neighboring cells that are interfering transmissions with respect to the wireless device 12. In turn, the network node 10 generates IM configuration information for the network node(s) that control the interfering transmissions, which information indicates the configured or restricted resources. Correspondingly, the other node(s) are configured to use the configured resources, or to avoid the restricted resources, when scheduling/performing the interfering transmissions.

In one example, the network node 10 configures the interfering nodes with a reduced set of resources out of the pre-defined full set of resources-e.g., a pre-defined look up table mapping the number of CDMA codes, available MCS, available transport formats, etc. This control can be achieved by configuring the interfering nodes with the identity of the table containing a pre-defined set of resources and ranges of the reduced set, e.g. a table with ID = 0 and ranges of sets of resource from ID = 0-15. Upon receiving IM configuration information indicating a restricted set of resources for downlink transmissions, the interfering cell starts scheduling the wireless devices 12 served by it using the allowed set of resources. The configuration done at the interfering nodes can be valid for certain time period, e.g. for the next ten transmission frames. Alternatively, they can be valid until new configuration is received from the network node 10.

The contents of IM configuration information sent to a given wireless device 12 in one example includes information about interfering cells or nodes, e.g., cell IDs, node IDs, RRH IDs etc.; an indication of the IM mode(s) selected for the wireless device 12; and assistance information, if any, applicable to each selected IM mode. Interfering cell or node IDs are sent to the wireless device 12 via higher layer signaling, e.g., using RRC signaling via RNC or eNode B to the wireless device 12. This approach complements the fact that the cells that are interfering cells to the wireless device 12 generally do not change on a rapid basis. The IM mode selections for the wireless device 12 also may be configured using a higher layer protocol, such as RRC signaling. For example, an RNC in HSPA or an eNode B in LTE configures the wireless device 12 in question with the selected IM mode(s).

As for the assistance information applicable to the selected IM modes, the network node 10 in some embodiments uses different approaches in dependence on the type or contents of the assistance information. For example, dynamic information, such as wireless device IDs and dynamically used physical resources in interfering cells, is sent to the victim wireless device 12 preferably by lower layer signaling, e.g., by the serving base station of the victim wireless device 12. Lower layer signaling examples include MAC layer, L1 channels, such as HS-SCCH in HSPA and PDCCH in LTE. The use of lower-layer signaling here is advantageous because such information changes rapidly, e.g., on a TTI basis.

On the other hand semi-static information such as the restricted set or allowed set of physical resources to be used in the interfering cell(s) can be sent to the victim wireless device 12 via RRC or other higher layer signaling. For example, such information is sent to the victim wireless device 12 occasionally such as at initial setup or when the wireless device 12 is configured with the selected IM mode or modes. Thus, it should be understood that sending the IM configuration information for a given wireless device 12 may involve more than one message and may be carried out using different protocol layers and at different times. Further, some parts of the IM configuration information-e.g., the selected IM mode(s)-may be sent once or only occasionally, while other parts-e.g., device IDs, etc.-may be sent more rapidly.

Of further note, there is a relationship between the IM configuration information and the channel type(s) associated with the interfering transmissions. That is, the contents of the assistance data depend on the type of physical channels on which the victim wireless device 12 is to apply IM. The contents here refer to the information related to downlink transmissions in interfering cells, such as device IDs, physical resources, etc., used in interfering cell(s). For example if the victim wireless device 12 is required to apply IM using DAIM only on a shared channel, such as the HS-DSCH in HSPA, then the network node 10 may have to provide details of the physical resources, such as the CDMA codes, the MCS, etc., used in interfering cells. On the other hand, if the victim wireless device 12 is required to use the DAIM mode on a control channel, such as the HS-SCCH in HSPA, then the network node 10 may only need to provide the device IDs of the wireless devices 12 served in the interfering cell(s). In a further example, if the victim wireless device 12 is required to apply IM using DAIM on a shared channel and on a control channel, then the network node 10 still may only have to provide device IDs for the wireless devices 12 served on the downlink in the interfering cell(s), because the victim wireless device 12 can determine the scheduled resources after decoding the control channel in the interfering cell(s). Such processing further allows the victim wireless device 12 to also decode the shared channel, as transmitted to the wireless devices 12 being served in the interfering cell(s).

Upon receiving IM configuration information, including applicable assistance data, the victim wireless device 12 chooses an IM mode from among the IM modes indicated by the IM configuration data as being selected by the network node 10, and stores the assistance information, for processing related to the interfering cell. In particular, the wireless device 12 decodes the downlink transmissions or signals sent in the downlink to the wireless device(s) 12 being served in the interfering cell(s). The victim wireless device 12 then uses the decoded information to mitigate the interference caused at its receiver circuit 20 from the interfering signals.

Also, as noted, when the IM configuration indicates to the victim wireless device 12 that more than one IM mode has been selected by the network node 10, the wireless device 12 may choose the particular IM mode to use for its receiver circuit 20, based on performing its own selection evaluation process. That process may consider any one or more of the operating parameters identified herein for the IM mode selection evaluation performed by the network node 10. It is advantageous in such cases to use operating parameter information that is already available to the wireless device 12, such as signal quality or other reception condition, battery state, etc., but the network node 10 in some embodiments signals the operating parameter(s) to be considered by the wireless device 12 when selecting a specific IM mode from two or more IM modes selected by the network node 10. In this regard, the network node 10 can indicate a most preferred one of the two or more IM modes and/or can provide the current or most-recent operating parameter values for any operating parameter to be considered by the wireless device 12 in selecting a specific IM mode, at least for such parameters as are not already known at the wireless device 12.

Notably, modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure, which is only defined by the appended claims. Although specific terms may be employed herein, they are used in a generic and descriptive sense only and not for purposes of limitation.

## Claims

1. A method (300) at a network node (10) in a wireless communication network (50), of selecting an interference-mitigation, IM, mode, to be used by a wireless device (12) operating in the network (50), said method (300) comprising:
obtaining (302) capability information for a wireless device (12), wherein the capability information indicates which particular IM modes the wireless device (12) supports from among a plurality of defined IM modes that differ with respect to an amount of network assistance required;
obtaining (304) selection information bearing on the selection of IM modes for the wireless device (12), said selection information comprising one or more operating parameters associated with current operation of the network (50) and/or the wireless device (12);
selecting (306) one or more of the supported IM modes from the particular IM modes, as indicated by the capability information, based on evaluating the selection information; and
sending (308) IM configuration information for the wireless device (12), indicating the selected one or more IM modes.

2. The method (300) of claim 1, wherein the one or more operating parameters include at least one of: network loading with respect to at least a serving cell (64) of the wireless device (12); a distribution of wireless devices at least in the serving cell (64) of the wireless device (12); signal quality at the wireless device (12); user traffic characteristics at least in the serving cell (64) of the wireless device (12); and a battery state at the wireless device (12).

3. The method (300) of any of claims 1-2, further comprising generating the IM configuration information for the wireless device (12) as IM assistance data in dependence upon the selected one or more IM modes.

4. The method (300) of claim 3, wherein generating the IM assistance data is based at least in part on acquiring information related to downlink transmissions in one or more cells (64) that are interfering cells (64) with respect to the wireless device (12), where such information includes at least one of: transport format information, physical channel resource information, resource block information as used for the downlink transmissions in the one or more interfering cells (64), traffic characteristics of users in the one or more interfering cells (64), network loading with respect to the one or more interfering cells (64), the number of interfering cells (64), and device identifiers for one or more other wireless devices operating in the one or more interfering cells (64).

5. The method (300) of any of claims 1-4, further comprising generating IM configuration information for one or more network nodes that are associated with one or more cells (64) in the network (50), which one or more cells (64) are interfering cells (64) with respect to the wireless device (12), wherein the IM configuration information generated for the one or more network nodes comprises network node configuration information indicating physical resource selections or identifying physical resource restrictions to be observed in the interfering cells (64) for at least some types of downlink transmissions.

6. The method (300) of any of claims 1-4, further comprising generating IM configuration information for one or more network nodes that are associated with one or more cells (64) in the network (50) that are interfering cells (64) with respect to the wireless device (12), as network node configuration information that indicates at least one of a reduced set of physical resources and user scheduling restrictions, to be used in one or more of the interfering cells (64), at least for certain downlink transmissions.

7. A network node (10) configured for use in a wireless communication network (50) and comprising:
a communication interface (16); and
a processing circuit (14, 32) that is associated with the communication interface (16) and configured to:
obtain capability information for a wireless device (12), wherein the capability information indicates which particular IM modes the wireless device (12) supports from among a plurality of defined IM modes that differ at least with respect to an amount of network assistance required;
obtain selection information bearing on the selection of IM modes for the wireless device (12), said selection information comprising one or more operating parameters associated with current operation of the network (50) and/or the wireless device (12);
select one or more of the supported IM modes from the particular IM modes, as indicated by the capability information, based on evaluating the selection; and
send IM configuration information for the wireless device (12) via the communication interface (16), indicating the selected one or more IM modes.

8. A method (400) at a wireless device (12) that is configured for operation in a wireless communication network (50), of selecting an interference-mitigation, IM mode, to be used by the wireless device (12) for operation in the network (50), said method comprising:
sending (402) IM capability information to the network (50), indicating which particular IM modes the wireless device (12) supports from a plurality of defined IM modes that differ with respect to an amount of network assistance required;
receiving (404) IM configuration information from the network (50) that indicates a selected one or more of the defined IM modes from the particular IM modes, as selected by the network (50) for use by the wireless device (12); and
operating (406) a receiver circuit (20) in the wireless device (12) according to one of the one or more selected IM modes.

9. The method (400) of claim 8, wherein the IM configuration information further indicates information related to downlink transmissions in one or more cells (64) neighboring a serving cell (64) of the wireless device (12), where such information includes at least one of: transport format information, physical channel resource information, resource block information as used for the downlink transmissions in the one or more neighboring cells (64) and device identifiers for one or more other wireless devices operating in the one or more neighboring cells (64); and wherein operating the receiver circuit (20) includes configuring IM operation of the receiver circuit (20) in dependence on said information.

10. The method (400) of claim 8 or 9, wherein the IM configuration information further indicates a reduced or restricted set of physical resources that are or will be used by one or more interfering transmitters in one or more cells (64) neighboring a serving cell (64) of the wireless device (12), and wherein operating the receiver circuit (20) includes configuring IM operations in dependence on the reduced or restricted set of physical resources.

11. The method (400) of any of claims 8-10, wherein sending (402) the IM capability information includes sending an Information Element, IE, or other indicator that indicates which two or more IM modes the wireless device (12) supports from among a plurality of defined IM modes.

12. The method (400) of claim 11, wherein the plurality of defined IM modes comprises a Dynamically Network Assisted Interference Mitigation, DAIM, mode, a Semi-statically Network Assisted Interference Mitigation, SAIM, mode, and a Non-Network Assisted Interference Mitigation, NNAIM, mode.

13. The method (400) of any of claims 8-12, wherein, for a case where the IM configuration information indicates a selected two or more of the defined IM modes, operating (406) the receiver circuit (20) in the wireless device (12) according to one of the one or more selected IM modes comprises, choosing one of the selected two or more modes for operating the receiver circuit (20), based on selection information bearing on the selection of IM modes at the wireless device (12).

14. The method (400) of claim 13, wherein the one or more operating parameters include at least one of: network loading with respect to at least a serving cell (64) of the wireless device (12); a distribution of wireless devices at least in the serving cell (64) of the wireless device (12); signal quality at the wireless device (12); user traffic characteristics at least in the serving cell (64) of the wireless device (12); and a battery state at the wireless device (12).

15. A wireless device (12) configured for operation in a wireless communication network (50) and comprising:
a communication interface (20, 40); and
a processing circuit (22, 42) that is associated with the communication interface (20, 40) and is configured to select an interference-mitigation, IM, mode, to be used by the wireless device (12) for operation in the network (50), based on being configured to:
send IM capability information to the network (50), indicating which particular IM modes the wireless device (12) supports from a plurality of defined IM modes that differ with respect to an amount of network assistance required;
receive IM configuration information from the network (50) that indicates a selected one or more of the defined IM modes from the particular IM modes, as selected by the network (50) for use by the wireless device (12); and
operate a receiver circuit (20) in the wireless device (12) according to one of the one or more selected IM modes.

## Patentansprüche

1. Verfahren (300) an einem Netzknoten (10) in einem drahtlosen Kommunikationsnetz (50) zum Auswählen eines Interferenzabschwächungsmodus, IM-Modus, der von einer im Netzwerk (50) arbeitenden drahtlosen Vorrichtung (12) verwendet werden soll, wobei das Verfahren (300) umfasst:
Erhalten (302) von Leistungsfähigkeitsinformationen für eine drahtlose Vorrichtung (12), wobei die Leistungsfähigkeitsinformationen angeben, welche spezifischen IM-Modi die drahtlose Vorrichtung (12) aus einer Vielzahl von definierten IM-Modi unterstützt, die sich in Bezug auf ein Ausmaß der erforderlichen Netzunterstützung unterscheiden;
Erhalten (304) von Auswahlinformationen, die die Auswahl von IM-Modi für die drahtlose Vorrichtung (12) betreffen, wobei die Auswahlinformationen einen oder mehrere Betriebsparameter umfassen, die dem aktuellen Betrieb des Netzes (50) und/oder der drahtlosen Vorrichtung (12) zugeordnet sind;
Auswählen (306) eines oder mehrerer der unterstützten IM-Modi aus den spezifischen IM-Modi, wie durch die Leistungsfähigkeitsinformationen angegeben, basierend auf der Auswertung der Auswahlinformationen; und
Senden (308) von IM-Konfigurationsinformationen für die drahtlose Vorrichtung (12), die den einen oder die mehreren ausgewählten IM-Modi angeben.

2. Verfahren (300) nach Anspruch 1, wobei der eine oder die mehreren Betriebsparameter mindestens eines einschließen von: Netzbelastung in Bezug auf mindestens eine bedienende Zelle (64) der drahtlosen Vorrichtung (12); einer Verteilung von drahtlosen Vorrichtungen mindestens in der bedienenden Zelle (64) der drahtlosen Vorrichtung (12); Signalqualität an der drahtlosen Vorrichtung (12); Benutzerverkehrsmerkmalen mindestens in der bedienenden Zelle (64) der drahtlosen Vorrichtung (12); und einem Batteriezustand an der drahtlosen Vorrichtung (12).

3. Verfahren (300) nach einem der Ansprüche 1-2, ferner umfassend das Erzeugen der IM-Konfigurationsinformationen für die drahtlose Vorrichtung (12) als IM-Hilfsdaten in Abhängigkeit von dem einen oder den mehreren ausgewählten IM-Modi.

4. Verfahren (300) nach Anspruch 3, wobei das Erzeugen der IM-Hilfsdaten mindestens teilweise auf dem Erfassen von Informationen basiert, die sich auf Downlink-Übertragungen in einer oder mehreren Zellen (64) beziehen, die störende Zellen (64) in Bezug auf die drahtlose Vorrichtung (12) sind, wobei diese Informationen mindestens eines einschließen von: Transportformatinformationen, Informationen über physische Kanalressourcen, Ressourcenblockinformationen, wie sie für die Downlink-Übertragungen in einer oder mehreren störenden Zellen (64) verwendet werden, Verkehrsmerkmalen von Benutzern in der einen oder den mehreren störenden Zellen (64), Netzbelastung in Bezug auf die eine oder mehreren störenden Zellen (64), die Anzahl der störenden Zellen (64) und Vorrichtungskennungen für eine oder mehrere andere drahtlose Vorrichtungen, die in der einen oder den mehreren störenden Zellen (64) arbeiten.

5. Verfahren (300) nach einem der Ansprüche 1-4, ferner umfassend das Erzeugen von IM-Konfigurationsinformationen für einen oder mehrere Netzknoten, die einer oder mehreren Zellen (64) im Netzwerk (50) zugeordnet sind, wobei eine oder mehrere Zellen (64) störende Zellen (64) in Bezug auf die drahtlose Vorrichtung (12) sind, wobei die für den einen oder die mehreren Netzknoten erzeugten IM-Konfigurationsinformationen Netzknoten-Konfigurationsinformationen umfassen, die die Auswahlen von physischen Ressourcen angeben oder Beschränkungen von physischen Ressourcen identifizieren, die in den störenden Zellen (64) für mindestens einige Arten von Downlink-Übertragungen zu beachten sind.

6. Verfahren (300) nach einem der Ansprüche 1-4, ferner umfassend das Erzeugen von IM-Konfigurationsinformationen für einen oder mehrere Netzknoten, die einer oder mehreren Zellen (64) im Netzwerk (50) zugeordnet sind, die störende Zellen (64) in Bezug auf die drahtlose Vorrichtung (12) sind, als Netzknoten-Konfigurationsinformationen, die mindestens eine aus einem reduzierten Satz von physischen Ressourcen und Benutzerplanungsbeschränkungen angeben, die in einer oder mehreren der störenden Zellen (64) mindestens für bestimmte Downlink-Übertragungen verwendet werden sollen.

7. Netzknoten (10), der zum Betrieb in einem drahtlosen Kommunikationsnetz (50) konfiguriert ist und umfasst:
eine Kommunikationsschnittstelle (16); und
eine Verarbeitungsschaltung (14, 32), die der Kommunikationsschnittstelle (16) zugeordnet ist und konfiguriert ist zum:
Erhalten von Leistungsfähigkeitsinformationen für eine drahtlose Vorrichtung (12), wobei die Leistungsfähigkeitsinformationen angeben, welche spezifischen IM-Modi die drahtlose Vorrichtung (12) aus einer Vielzahl von definierten IM-Modi unterstützt, die sich mindestens in Bezug auf ein Ausmaß der erforderlichen Netzunterstützung unterscheiden;
Erhalten von Auswahlinformationen, die die Auswahl von IM-Modi für die drahtlose Vorrichtung (12) betreffen, wobei die Auswahlinformationen einen oder mehrere Betriebsparameter umfassen, die dem aktuellen Betrieb des Netzwerkes (50) und/oder der drahtlosen Vorrichtung (12) zugeordnet sind;
Auswählen eines oder mehrerer der unterstützten IM-Modi aus den spezifischen IM-Modi, wie in den Leistungsfähigkeitsinformationen angegeben, basierend auf der Auswertung der Auswahl; und
Senden von IM-Konfigurationsinformationen für die drahtlose Vorrichtung (12) über die Kommunikationsschnittstelle (16), die den einen oder die mehreren ausgewählten IM-Modi angeben.

8. Verfahren (400) an einer drahtlosen Vorrichtung (12), die für den Betrieb in einem drahtlosen Kommunikationsnetz (50) konfiguriert ist, zum Auswählen eines Interferenzabschwächungsmodus, IM-Modus, der von der drahtlosen Vorrichtung (12) für den Betrieb im Netzwerk (50) verwendet werden soll, wobei das Verfahren umfasst:
Senden (402) von IM-Leistungsfähigkeitsinformationen an das Netzwerk (50), die angeben, welche spezifischen IM-Modi die drahtlose Vorrichtung (12) aus einer Vielzahl von definierten IM-Modi unterstützt, die sich in Bezug auf ein Ausmaß der erforderlichen Netzunterstützung unterscheiden;
Empfangen (404) von IM-Konfigurationsinformationen vom Netzwerk (50), die einen oder mehrere ausgewählte der definierten IM-Modi aus den spezifischen IM-Modi angeben, wie sie vom Netzwerk (50) zur Verwendung durch die drahtlose Vorrichtung (12) ausgewählt wurden; und
Betreiben (406) einer Empfängerschaltung (20) in der drahtlosen Vorrichtung (12) gemäß einem der einen oder der mehreren ausgewählten IM-Modi.

9. Verfahren (400) nach Anspruch 8, wobei die IM-Konfigurationsinformationen ferner Informationen in Bezug auf Downlink-Übertragungen in einer oder mehreren Zellen (64) angeben, die an eine bedienende Zelle (64) der drahtlosen Vorrichtung (12) angrenzt, wobei diese Informationen mindestens eines einschließen von: Transportformatinformationen, Informationen über physische Kanalressourcen, Ressourcenblockinformationen, wie sie für die Downlink-Übertragungen in der einen oder den mehreren angrenzenden Zellen (64) verwendet werden, und Vorrichtungskennungen für eine oder mehrere andere drahtlose Vorrichtungen, die in der einen oder den mehreren angrenzenden Zellen (64) arbeiten; und wobei das Betreiben der Empfängerschaltung (20) das Konfigurieren des IM-Betriebs der Empfängerschaltung (20) in Abhängigkeit von den Informationen einschließt.

10. Verfahren (400) nach Anspruch 8 oder 9, wobei die IM-Konfigurationsinformationen ferner einen reduzierten oder eingeschränkten Satz von physischen Ressourcen angeben, die von einem oder mehreren störenden Sendern in einer oder mehreren Zellen (64) angrenzend an eine bedienende Zelle (64) der drahtlosen Vorrichtung (12) jetzt oder später verwendet werden, und wobei das Betreiben der Empfängerschaltung (20) das Konfigurieren von IM-Operationen in Abhängigkeit von dem reduzierten oder eingeschränkten Satz von physischen Ressourcen einschließt.

11. Verfahren (400) nach einem der Ansprüche 8-10, wobei das Senden (402) der IM-Leistungsfähigkeitsinformationen das Senden eines Informationselements, IE, oder eines anderen Indikators einschließt, der angibt, welche zwei oder mehreren IM-Modi die drahtlose Vorrichtung (12) aus einer Vielzahl von definierten IM-Modi unterstützt.

12. Verfahren (400) nach Anspruch 11, wobei die Vielzahl der definierten IM-Modi einen dynamisch-netzunterstützten Interferenzabschwächungsmodus, DAIM-Modus, einen semi-statisch-netzunterstützten Interferenzabschwächungsmodus, SAIM-Modus und einen nicht-netzunterstützten Interferenzabschwächungsmodus, NNAIM-Modus, umfasst.

13. Verfahren (400) nach einem der Ansprüche 8-12, wobei für einen Fall, in dem die IM-Konfigurationsinformationen zwei oder mehr ausgewählte der definierten IM-Modi angeben, das Betreiben (406) der Empfängerschaltung (20) in der drahtlosen Vorrichtung (12) gemäß einem der einen oder mehreren ausgewählten IM-Modi das Auswählen von einem der ausgewählten zwei oder mehreren Modi zum Betreiben der Empfängerschaltung (20), basierend auf Auswahlinformationen, die die Auswahl der IM-Modi an der drahtlosen Vorrichtung (12) betreffen, umfasst.

14. Verfahren (400) nach Anspruch 13, wobei der eine oder die mehreren Betriebsparameter mindestens eines einschließen von: Netzbelastung in Bezug auf mindestens eine bedienende Zelle (64) der drahtlosen Vorrichtung (12); einer Verteilung von drahtlosen Vorrichtungen mindestens in der bedienenden Zelle (64) der drahtlosen Vorrichtung (12); Signalqualität an der drahtlosen Vorrichtung (12); Benutzerverkehrsmerkmalen mindestens in der bedienenden Zelle (64) der drahtlosen Vorrichtung (12); und einem Batteriezustand an der drahtlosen Vorrichtung (12).

15. Drahtlose Vorrichtung (12), die zum Betrieb in einem drahtlosen Kommunikationsnetz (50) konfiguriert ist und umfasst:
eine Kommunikationsschnittstelle (20, 40); und
eine Verarbeitungsschaltung (22, 42), die der Kommunikationsschnittstelle (20, 40) zugeordnet ist und dazu konfiguriert ist, einen Interferenzabschwächungsmodus, IM-Modus, auszuwählen, der von der drahtlosen Vorrichtung (12) für den Betrieb in dem Netzwerk (50) verwendet werden soll, basierend darauf, konfiguriert zu werden zum:
Senden von IM-Leistungsfähigkeitsinformationen an das Netzwerk (50), die angeben, welche spezifischen IM-Modi die drahtlose Vorrichtung (12) aus einer Vielzahl von definierten IM-Modi unterstützt, die sich in Bezug auf ein Ausmaß der erforderlichen Netzunterstützung unterscheiden;
Empfangen von IM-Konfigurationsinformationen aus dem Netzwerk (50), die einen oder mehrere ausgewählte der definierten IM-Modi aus den spezifischen IM-Modi angeben, wie sie vom Netzwerk (50) zur Verwendung durch die drahtlose Vorrichtung (12) ausgewählt wurden; und
Betreiben einer Empfängerschaltung (20) in der drahtlosen Vorrichtung (12) gemäß einem der einen oder der mehreren ausgewählten IM-Modi.

## Revendications

1. Procédé (300) au niveau d'un nœud de réseau (10) dans un réseau de communication sans fil (50), de sélection d'un mode d'atténuation d'interférence, IM, à utiliser par un dispositif sans fil (12) fonctionnant dans le réseau (50), ledit procédé (300) comprenant :
l'obtention (302) d'informations de capacité pour un dispositif sans fil (12), dans lequel les informations de capacité indiquent quels modes IM particuliers le dispositif sans fil (12) prend en charge parmi une pluralité de modes IM définis qui diffèrent par rapport à une quantité d'assistance réseau requise ;
l'obtention (304) d'informations de sélection reposant sur la sélection de modes IM pour le dispositif sans fil (12), lesdites informations de sélection comprenant un ou plusieurs paramètres opérationnels associés à un fonctionnement actuel du réseau (50) et/ou du dispositif sans fil (12) ;
la sélection (306) d'un ou plusieurs des modes IM pris en charge parmi les modes IM particuliers, comme indiqué par les informations de capacité, sur la base d'une évaluation des informations de sélection ; et
l'envoi (308) des informations de configuration IM pour le dispositif sans fil (12), indiquant le ou les modes IM sélectionnés.

2. Procédé (300) selon la revendication 1, dans lequel le ou les paramètres opérationnels incluent au moins l'un parmi : une charge de réseau par rapport à au moins une cellule de desserte (64) du dispositif sans fil (12) ; une distribution de dispositifs sans fil au moins dans la cellule de desserte (64) du dispositif sans fil (12) ; une qualité de signal au niveau du dispositif sans fil (12) ; des caractéristiques de trafic d'utilisateur au moins dans la cellule de desserte (64) du dispositif sans fil (12) ; et un état de batterie au niveau du dispositif sans fil (12).

3. Procédé (300) selon l'une quelconque des revendications 1 ou 2, comprenant en outre la génération des informations de configuration IM pour le dispositif sans fil (12) en tant que données d'assistance IM en fonction du ou des modes IM sélectionnés.

4. Procédé (300) selon la revendication 3, dans lequel la génération des données d'assistance IM est basée au moins en partie sur l'acquisition d'informations se rapportant à des transmissions en liaison descendante dans une ou plusieurs cellules (64) qui sont des cellules interférentes (64) par rapport au dispositif sans fil (12), où de telles informations incluent au moins l'un parmi : des informations de format de transport, des informations de ressource de canal physique, des informations de bloc de ressource telles qu'utilisées pour les transmissions en liaison descendante dans la ou les cellules interférentes (64), des caractéristiques de trafic d'utilisateurs dans la ou les cellules interférentes (64), une charge de réseau par rapport à la ou aux cellules interférentes (64), le nombre de cellules interférentes (64) et des identificateurs de dispositif pour un ou plusieurs autres dispositifs sans fil fonctionnant dans la ou les cellules interférentes (64).

5. Procédé (300) selon l'une quelconque des revendications 1 à 4, comprenant en outre la génération des informations de configuration IM pour un ou plusieurs nœuds de réseau qui sont associés à une ou plusieurs cellules (64) dans le réseau (50), laquelle ou lesquelles cellules (64) sont des cellules interférentes (64) par rapport au dispositif sans fil (12), dans lequel les informations de configuration IM générées pour le ou les nœuds de réseau comprennent des informations de configuration de nœud de réseau indiquant des sélections de ressource physique ou identifiant des restrictions de ressource physique à observer dans les cellules interférentes (64) pour au moins certains types de transmissions en liaison descendante.

6. Procédé (300) selon l'une quelconque des revendications 1 à 4, comprenant en outre la génération d'informations de configuration IM pour un ou plusieurs nœuds de réseau qui sont associés à une ou plusieurs cellules (64) dans le réseau (50) qui sont des cellules interférentes (64) par rapport au dispositif sans fil (12), en tant qu'informations de configuration de nœud de réseau qui indiquent au moins l'un parmi un ensemble réduit de ressources physiques et des restrictions de planification d'utilisateur, à utiliser dans une ou plusieurs des cellules interférentes (64), au moins pour certaines transmissions en liaison descendante.

7. Nœud de réseau (10) configuré pour utilisation dans un réseau de communication sans fil (50) et comprenant :
une interface de communication (16) ; et
un circuit de traitement (14, 32) qui est associé à l'interface de communication (16) et configuré pour :
obtenir des informations de capacité pour un dispositif sans fil (12), dans lequel les informations de capacité indiquent quels modes IM particuliers le dispositif sans fil (12) prend en charge parmi une pluralité de modes IM définis qui diffèrent au moins par rapport à une quantité d'assistance réseau requise ;
obtenir des informations de sélection reposant sur la sélection de modes IM pour le dispositif sans fil (12), lesdites informations de sélection comprenant un ou plusieurs paramètres opérationnels associés à un fonctionnement actuel du réseau (50) et/ou du dispositif sans fil (12) ;
sélectionner un ou plusieurs des modes IM pris en charge parmi les modes IM particuliers, comme indiqué par les informations de capacité, sur la base d'une évaluation de la sélection ; et
envoyer des informations de configuration IM pour le dispositif sans fil (12) via l'interface de communication (16), indiquant le ou les modes IM sélectionnés.

8. Procédé (400) au niveau d'un dispositif sans fil (12) qui est configuré pour un fonctionnement dans un réseau de communication sans fil (50), de sélection d'un mode d'atténuation d'interférence, IM, à utiliser par le dispositif sans fil (12) pour un fonctionnement dans le réseau (50), ledit procédé comprenant :
l'envoi (402) d'informations de capacité IM au réseau (50), indiquant quels modes IM particuliers le dispositif sans fil (12) prend en charge parmi une pluralité de modes IM définis qui diffèrent par rapport à une quantité d'assistance réseau requise ;
la réception (404) d'informations de configuration IM depuis le réseau (50) qui indiquent un ou plusieurs sélectionnés des modes IM définis parmi les modes IM particuliers, tels que sélectionnés par le réseau (50) pour une utilisation par le dispositif sans fil (12) ; et
le fonctionnement (406) d'un circuit récepteur (20) dans le dispositif sans fil (12) selon l'un parmi le ou les modes IM sélectionnés.

9. Procédé (400) selon la revendication 8, dans lequel les informations de configuration IM indiquent en outre des informations se rapportant à des transmissions en liaison descendante dans une ou plusieurs cellules (64) voisines d'une cellule de desserte (64) du dispositif sans fil (12), où de telles informations incluent au moins l'un parmi : des informations de format de transport, des informations de ressource de canal physique, des informations de bloc de ressource telles qu'utilisées pour les transmissions en liaison descendante dans la ou les cellules voisines (64) et des identificateurs de dispositif pour un ou plusieurs autres dispositifs sans fil fonctionnant dans la ou les cellules voisines (64) ; et dans lequel le fonctionnement du circuit récepteur (20) inclut la configuration d'une opération IM du circuit récepteur (20) en fonction desdites informations.

10. Procédé (400) selon la revendication 8 ou 9, dans lequel les informations de configuration IM indiquent en outre un ensemble réduit ou restreint de ressources physiques qui sont ou seront utilisées par un ou plusieurs émetteurs interférents dans une ou plusieurs cellules (64) voisines d'une cellule de desserte (64) du dispositif sans fil (12), et dans lequel le fonctionnement du circuit récepteur (20) inclut la configuration d'opérations IM en fonction de l'ensemble réduit ou restreint de ressources physiques.

11. Procédé (400) selon l'une quelconque des revendications 8 à 10, dans lequel l'envoi (402) des informations de capacité IM inclut l'envoi d'un élément d'information, IE, ou d'un autre indicateur qui indique quels modes IM au nombre de deux ou plus le dispositif sans fil (12) prend en charge parmi une pluralité de modes IM définis.

12. Procédé (400) selon la revendication 11, dans lequel la pluralité de modes IM définis comprend un mode d'atténuation d'interférence assistée dynamiquement par réseau, DAIM, un mode d'atténuation d'interférence assistée de façon semi-statique par réseau, SAIM, et un mode d'atténuation d'interférence non assistée par réseau, NNAIM.

13. Procédé (400) selon l'une quelconque des revendications 8 à 12, dans lequel, pour un cas où les informations de configuration IM indiquent deux ou plus sélectionnés des modes IM définis, le fonctionnement (406) du circuit récepteur (20) dans le dispositif sans fil (12) selon l'un parmi le ou les modes IM sélectionnés comprend le choix de l'un des deux modes ou plus sélectionnés pour un fonctionnement du circuit récepteur (20), sur la base d'informations de sélection reposant sur la sélection de modes IM au niveau du dispositif sans fil (12).

14. Procédé (400) selon la revendication 13, dans lequel le ou les paramètres opérationnels incluent au moins l'un parmi : une charge de réseau par rapport à au moins une cellule de desserte (64) du dispositif sans fil (12) ; une distribution de dispositifs sans fil au moins dans la cellule de desserte (64) du dispositif sans fil (12) ; une qualité de signal au niveau du dispositif sans fil (12) ; des caractéristiques de trafic d'utilisateur au moins dans la cellule de desserte (64) du dispositif sans fil (12) ; et un état de batterie au niveau du dispositif sans fil (12).

15. Dispositif sans fil (12) configuré pour un fonctionnement dans un réseau de communication sans fil (50) et comprenant :
une interface de communication (20, 40) ; et
un circuit de traitement (22, 42) qui est associé à l'interface de communication (20, 40) et est configuré pour sélectionner un mode d'atténuation d'interférence, IM, à utiliser par le dispositif sans fil (12) pour un fonctionnement dans le réseau (50), sur la base du fait d'être configuré pour :
envoyer des informations de capacité IM au réseau (50), indiquant quels modes IM particuliers le dispositif sans fil (12) prend en charge parmi une pluralité de modes IM définis qui diffèrent par rapport à une quantité d'assistance réseau requise ;
recevoir des informations de configuration IM depuis le réseau (50) qui indiquent un ou plusieurs sélectionnés des modes IM définis parmi les modes IM particuliers, tels que sélectionnés par le réseau (50) pour une utilisation par le dispositif sans fil (12) ; et
faire fonctionner un circuit récepteur (20) dans le dispositif sans fil (12) selon l'un parmi le ou les modes IM sélectionnés.
